# EUROPÄISCHE PATENTSCHRIFT

(11) **EP 2 685 808 B1**
(45) Veröffentlichungstag und Bekanntmachung des Hinweises auf die Patenterteilung: **07.02.2018**
(21) Anmeldenummer: 11712201.0
(22) Anmeldetag: 18.03.2011
(51) Int. Cl.: A01J 5/017

(54) **MELKZEUG UND MELKSTAND MIT EINEM SOLCHEN MELKZEUG**
MILKING CLUSTER AND MILKING PARLOUR HAVING SUCH A MILKING CLUSTER
FAISCEAU TRAYEUR ET SALLE DE TRAITE ÉQUIPÉE D'UN TEL FAISCEAU TRAYEUR

(43) Veröffentlichungstag der Anmeldung: 22.01.2014
(73) Patentinhaber: GEA Farm Technologies GmbH, 59199 Bönen (DE)
(72) Erfinder: KRONE, Otto, 49479 Laggenbeck (DE)
(74) Vertreter: Specht, Peter
(86) Internationale Anmeldenummer: PCT/EP2011/054163
(87) Internationale Veröffentlichungsnummer: WO 2012/126502

(56) Entgegenhaltungen:
- EP-A2- 0 647 391
- WO-A1-00/13492
- WO-A1-98/46069
- WO-A2-98/05201

## Beschreibung

Die Erfindung betrifft ein Melkzeug nach dem Oberbegriff des Anspruchs 1. Die Erfindung bezieht sich auch auf einen Melkstand mit einem solchen Melkzeug.

Eine derartige Anordnung wird zum maschinellen Melken von milchgebenden Tieren verwendet.

Das Dokument EP 0 862 360 B1 beschreibt eine Vorrichtung zum automatischen Melken von Tieren, wobei ein Zitzenbecher mittels eines Seiles, das unten an dem Zitzenbecher angebracht ist, in einen Konus gezogen wird. Der Konus ist schwenkbar, sodass der Zitzenbecher unter eine Abdeckung geschwenkt werden kann.

Die Patentschrift EP 0647 391 B1 gibt eine Konstruktion zum automatischen Melken von Tieren an. Ein Zitzenbecher ist unmittelbar am Ende einer schlaufenförmigen Leitung angebracht, die in mindestens zwei Abschnitte unterteilbar ist. Ein erster Abschnitt ist mit dem Zitzenbecher verbunden und relativ starr, und ein zweiter Abschnitt ist relativ flexibel. Der Zitzenbecher wird außerdem durch eine Parallelführung, gegen welche er mit einem Seil anziehbar ist, gehalten und geführt.

Vor diesem Hintergrund besteht die Aufgabe der Erfindung darin, eine verbesserte Anordnung sowie einen Melkstand bereitzustellen.

Diese Aufgabe wird durch eine Anordnung mit den Merkmalen des Anspruchs 1 und durch einen Melkstand mit den Merkmalen des Anspruchs 12 gelöst.

Die erfindungsgemäße Anordnung umfasst ein Melkzeug für einen Melkstand zum Melken von milchgebenden Tieren, aufweisend mindestens eine Zitzenbechereinheit mit einem Gehäuse, einem Zitzenbecher, einer Antriebseinrichtung und einer mit dem Zitzenbecher verbundenen Schlauchanordnung, dadurch gekennzeichnet, dass die Schlauchanordnung mittels einer Schlauchführung geführt ist, welche in einer fixierten Position verschwenkbar und in einer von der fixierten Position unterschiedlichen Position durch ein flexibles Element begrenzt frei bewegbar ist, wobei eine Rückführung des Zitzenbechers nur mit Hilfe der Schlauchanordnung erfolgt. Die mindestens eine Zitzenbechereinheit kann aus einer Parkstellung, in welcher der Zitzenbecher eine zur Senkrechten geneigte, z.B. auch waagerechte, Position einnimmt, in eine Ansetzstellung, in welcher der Zitzenbecher in einer im Wesentlichen senkrechten Position steht, in eine Melkstellung, in welcher der Zitzenbecher mit einer zugeordneten Zitze des zu melkenden Tieres verbunden ist, und wieder zurück bewegt werden.

Das Melkzeug kann z.B. von einem Roboterarm derart bewegt werden, dass die Zitzenbecher einzeln aus einer Parkstellung in eine Ansetzstellung bewegt und an die entsprechenden Zitzen des zu melkenden Tieres in einer Melkstellung angehängt und am Ende des Melkvorgangs von den Zitzen abgezogen werden, wobei sie zunächst in die Ansetzstellung und dann in die Parkstellung zurückbewegt werden.

Mittels der Schlauchführung ist es dabei möglich, eine große freie Beweglichkeit des Zitzenbechers bei einer relativ kleinen freigegebenen Länge des flexiblen Elementes zu erzielen.

Ein weiterer bedeutender Vorteil liegt darin, dass ein Verheddern von Seilen mit benachbarten Zitzenbechern minimiert wird.

Da das flexible Element kurz ist und keine weiteren Seile zum Einsatz kommen, sind weder zusätzliche Rollen noch Flaschenzuganordnungen notwendig.

Mittels der umgeschwenkten Parkstellung der Zitzenbecher wird ein Verschmutzen derselben wirkungsvoll verhindert.

Abgeschlagene oder abgetretene oder auch abgefallene Zitzenbecher können sofort in die Parkstellung zurückbewegt werden und somit nicht auf den Boden fallen und verschmutzen.

Die Antriebseinrichtung der mindestens einen Zitzenbechereinheit kann mit der Schlauchanordnung und der Schlauchführung gleichzeitig in Wirkverbindung stehen, wodurch ein gemeinsamer Bewegungsablauf mit einer geringen Teilezahl erhalten wird.

Die Antriebseinrichtung kann in einer Stellung eine Zugkraft auf den Zitzenbecher mit der Schlauchanordnung zur Einnahme der Ansetzstellung in Anlage gegen die Schlauchführung ausüben, wobei gleichzeitig die Schlauchführung in der fixierten Position gehalten ist, und in einer anderen Stellung keine Zugkraft auf den Zitzenbecher ausüben, wobei gleichzeitig die Schlauchführung in die von der fixierten Position unterschiedliche Position freigegeben ist. Der Zitzenbecher ist nur mit der Schlauchanordnung verbunden und benötigt kein zusätzliches Seil.

Außerdem ist es möglich, dass bei schon in Melkstellung befindlichen Zitzenbechern eine seitliche Beweglichkeit möglich ist, ohne störende Zugkräfte auf diese in Melkstellung befindlichen Zitzenbecher auszuüben.

Dazu kann die Antriebseinrichtung über eine verstellbare Umlenkrolle mit der Schlauchanordnung und über ein flexibles Element mit der Schlauchführung zur Bewegung der mindestens einen Zitzenbechereinheit aus der Ansetzstellung in die Melkstellung und wieder zurück in die Ansetzstellung in Wirkverbindung stehen.

In einer bevorzugten Ausführung kann die Antriebseinrichtung als ein Verstellzylinder mit einer durchgehenden Kolbenstange ausgebildet sein, an deren einem Ende die Umlenkrolle und an deren anderen Ende das flexible Element angebracht ist. Hierbei ist es vorteilhaft, dass der Verstellzylinder nur einen kleinen Hub benötigt und wenig Bauraum beansprucht, wobei auch eine Kosteneinsparung möglich ist.

Das flexible Element kann über ein Kraftspeicherelement mit der Kolbenstange gekoppelt sein, wodurch ein notwendiger Längenausgleich bei der Verstellung ermöglicht ist.

In weiterer Ausführung kann die mindestens eine Zitzenbechereinheit eine Schwenkantriebseinrichtung zur Verschwenkung des Zitzenbechers aus der Ansetzstellung in die Parkstellung und zurück aufweisen.

Dabei kann die Schlauchführung in einem verschwenkbaren Fixierstück zur Einnahme ihrer fixierten Position aufnehmbar und mit dem verschwenkbaren Fixierstück mittels der Schwenkantriebseinrichtung in die Parkstellung und aus der Parkstellung in die Ansetzstellung verschwenkbar sein. Durch diese Anordnung ist es möglich, dass dazu die Schlauchanordnung herangezogen werden kann, ohne eine zusätzliche Einrichtung an dem Zitzenbecher anzubringen. Dadurch ist eine große freie Beweglichkeit des Zitzenbechers möglich.

Das flexible Element kann durch einen Führungsabschnitt des verschwenkbaren Fixierstücks geführt sein, was einen kompakten Aufbau ergibt.

Eine weitere gute Beweglichkeit ergibt sich, wenn die Schlauchführung Rollen zur axialen Führung der Schlauchanordnung aufweist.

In weiterer Ausführung kann die Schlauchanordnung einen Mehrfachschlauch, beispielsweise einen Doppelschlauch, aufweisen, in welchem sie mindestens teilweise angeordnet ist. Dadurch wird ein kompakter Aufbau erreicht, wobei ein Verheddern von Schläuchen weiter minimiert wird.

Ein Melkstand zum Melken von milchgebenden Tieren kann mit dem oben beschriebenen Melkzeug versehen sein.

Dabei kann das Melkzeug an einer Tragarmeinrichtung oder einem Roboterarm angebracht sein.

Vorteilhafte Weiterbildungen und Ausgestaltungen des Melkzeugs bzw. des Melkstands sind Gegenstand der jeweiligen abhängigen Ansprüche.

Weitere Vorteile und Einzelheiten gehen aus dem in den Figuren der Zeichnung dargestellten Ausführungsbeispiel hervor. Hierbei zeigen:
- Figur 1: eine schematische perspektivische Ansicht eines erfindungsgemäßen Melkzeugs;
- Figur 2: eine schematische Längsschnittdarstellung einer Zitzenbechereinheit des Melkzeugs nach Figur 1 in einer Ansetzstellung;
- Figur 3: eine schematische Längsschnittdarstellung der Zitzenbechereinheit des Melkzeugs nach Figur 1 in einer Parkstellung;
- Figur 4: eine schematische Längsschnittdarstellung der Zitzenbechereinheit des Melkzeugs nach Figur 1 in einer Melkstellung;
- Figuren 5, 5a und 5b: Darstellungen einer Schlauchführung;
- Figur 6: eine schematische Ansicht des Melkzeugs nach Figur 1 von unten;
- Figur 7: eine schematische Ansicht des Melkzeugs nach Figur 1 von der Seite der Zitzenbecher;
- Figur 8 und 9: Darstellungen der Zitzenbechereinheit des Melkzeugs in der Melkstellung zur Erläuterung von Doppelschlauchabschnitten; und
- Figur 10: eine perspektivische Darstellung eines erfindungsgemäßen Melkstands.

In den Figuren sind gleiche bzw. ähnliche Funktionselemente mit gleichen Bezugszeichen versehen. Ein Koordinatensystem x, y, z dient zur besseren Orientierung.

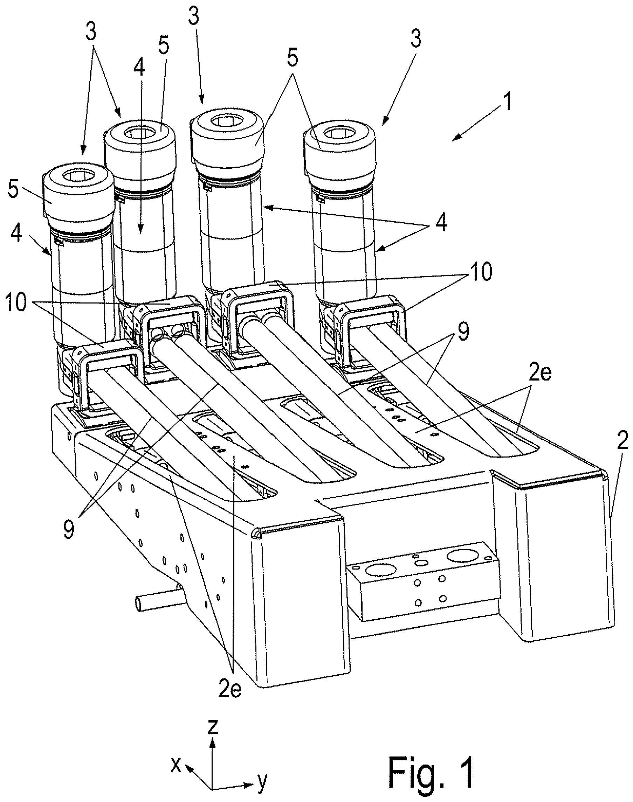

In Figur 1 ist eine schematische perspektivische Ansicht eines erfindungsgemäßen Melkzeugs 1 gezeigt.

Das Melkzeug 1 weist in diesem Ausführungsbeispiel vier Zitzenbechereinheiten 3 auf, welche in ihren Längsrichtungen (in x-Richtung) nebeneinander angeordnet sind und ein gemeinsames Gehäuse 2 aufweisen, das weiter unten noch näher beschrieben wird. Jede der vier Zitzenbechereinheiten 3 kann unabhängig von den anderen eine von drei unterschiedlichen Stellungen einnehmen, die unten im Einzelnen detailliert erläutert werden.

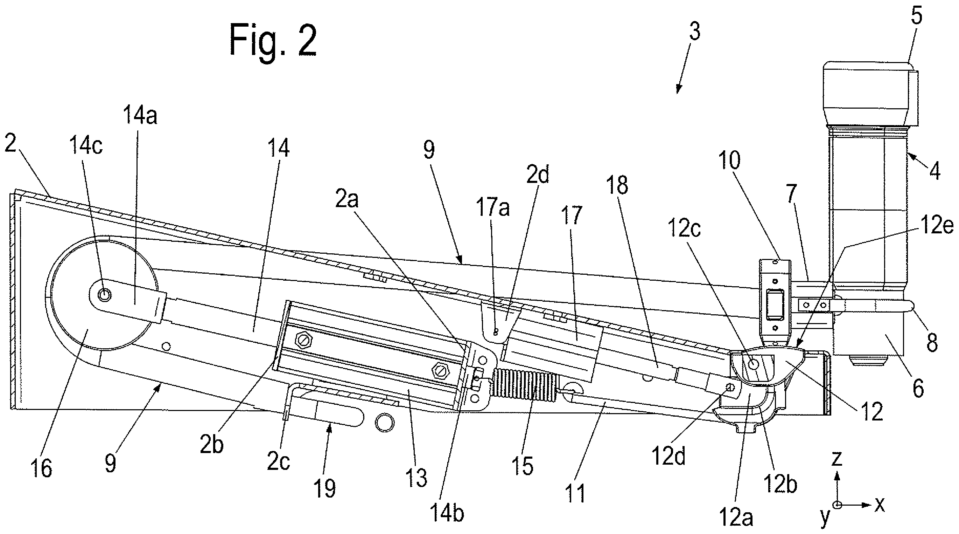

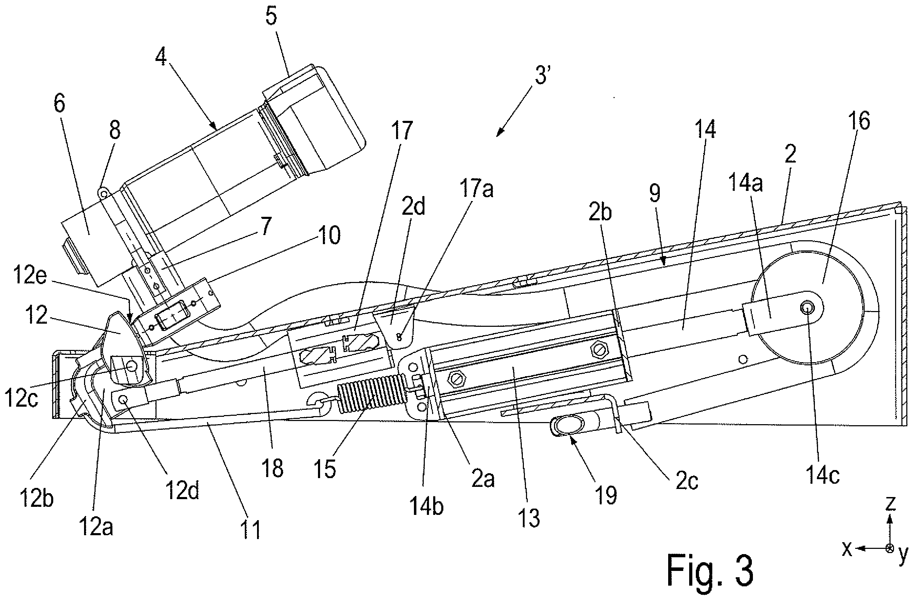

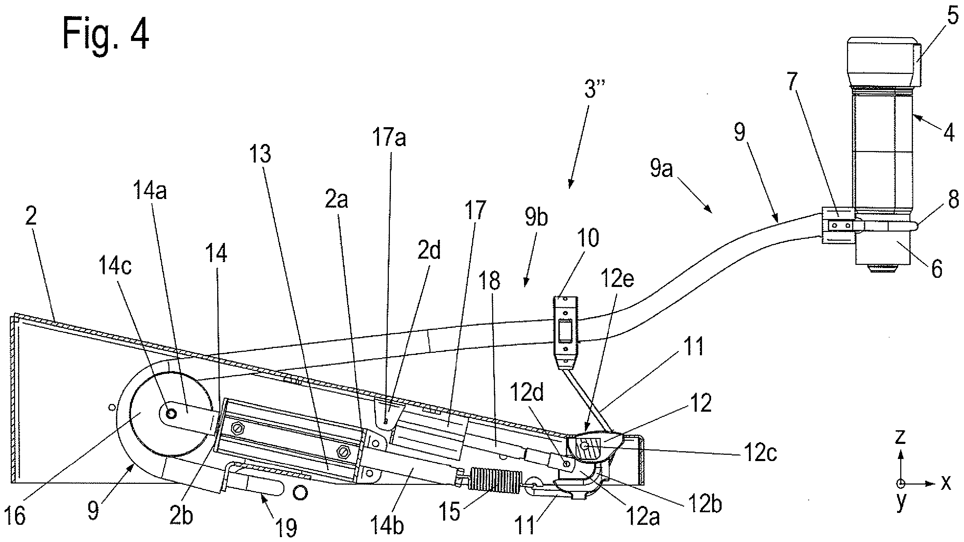

In Figur 1 sind die vier Zitzenbechereinheiten 3 der besseren Übersicht wegen in einer aufrechten, so genannten Ansetzstellung dargestellt, die im Zusammenhang mit Figur 2 beschrieben wird. In einer so genannten Parkstellung (siehe Figur 3) ist die jeweilige Zitzenbechereinheit 3 unbenutzt und aus der aufrechten Lage um die y-Achse verschwenkt. Die dritte Stellung ist eine so genannte Melkstellung, die in Figur 4 gezeigt ist. Zur besseren Unterscheidung ist die Zitzenbechereinheit 3 in Ansetzstellung mit dem Bezugszeichen 3, in der Parkstellung mit dem Bezugszeichen 3' und in der Melkstellung mit dem Bezugszeichen 3" versehen.

Jede Zitzenbechereinheit 3 weist einen Zitzenbecher 4 mit einem Zitzengummi, der einen Kopf 5 und einem Schaft hat, und einem Befestigungsabschnitt 6 auf. Der Kopf 5 besitzt eine Zitzenöffnung zum Einführen einer Zitze (nicht gezeigt). In einem Abstand zum Kopf 5 ist an dem unteren Ende des Schafts der Befestigungsabschnitt 6 mit einem Haltersegment 7, das in diesem Ausführungsbeispiel den Befestigungsabschnitt 6 mit einem Halterbügel 8 (andere Ausführungen sind natürlich möglich) umgreift, angeordnet.

Das Haltersegment 7 steht mit einem Doppelschlauch 9 in Verbindung, welcher in seinem Inneren Einzelschläuche zur Vakuumaufbringung und Milchabsaugung führt. Der Doppelschlauch 9 ist durch eine Schlauchführung 10 geführt und gehalten und in seinem weiteren Längsverlauf durch eine Öffnung 2e in einer in diesem Ausführungsbeispiel schräg verlaufenden Oberseite des Gehäuses 2 in dessen Inneres geführt, was im Weiteren noch näher erläutert wird. Das Gehäuse 2 kann z.B. auch stufig sein.

Figur 2 zeigt eine schematische Längsschnittdarstellung einer Zitzenbechereinheit 3 des Melkzeugs 1 nach Figur 1 in einer Ansetzstellung.

Die Ansetzstellung dient dazu, den Zitzenbecher 4 in eine in Relation zum Roboterarm fixierte Position zu bringen, um ihn dann an eine entsprechende Zitze eines zu melkenden Tieres anzuhängen. Dazu wird das Melkzeug 1 mit einer entsprechenden Vorrichtung, z.B. einem Roboterarm, bewegt.

Der Abschnitt des Gehäuses 2, welcher der jeweiligen Zitzenbechereinheit 3 zugeordnet ist, ist in diesem Ausführungsbeispiel im Querschnitt in der x-z-Ebene wie in Figur 2 dargestellt in etwa trapezförmig, aber nicht darauf beschränkt. Die Oberseite des Gehäuses 2 mit den Öffnungen 2e (Figur 1) verläuft von einer in z-Richtung höheren Rückseite des Gehäuses 2, die in Figur 2 links dem Zitzenbecher 4 gegenüberliegend angeordnet ist, schräg nach vorn (rechts in Figur 2) zu einer kurzen Vorderseite.

Der mit einem Ende durch das Haltersegment 7 an den Zitzenbecher 4 befestigte Doppelschlauch 9 verläuft durch die Schlauchführung 10, die Öffnung 2e des Gehäuses 2 auf die Rückseite des Gehäuses 2 zu und dann um eine in der Nähe der Rückseite des Gehäuses 2 befindlichen Umlenkrolle 16 bis zu einem Schlauchstutzenhalter 2c, an dem der Doppelschlauch 9 mit seinem anderen Ende befestigt ist. Der Schlauchstutzenhalter 2c ist mit dem Gehäuse 2 fest verbunden. Der Doppelschlauch 9 wird durch die Umlenkrolle 16 um etwa 180° in seiner Richtung umgelenkt und verläuft dann in x-Richtung auf die Vorderseite des Gehäuses 2 hin. An dem Schlauchstutzenhalter 2c sind Schlauchstutzen 19 angebracht.

Oberhalb des Schlauchstutzenhalters 2c ist eine Antriebseinrichtung 13, hier z.B. ein Pneumatikzylinder mit einer durchgehenden Kolbenstange 14, an Antriebshaltern 2a, 2b, die fest mit dem Gehäuse verbunden sind, fest angebracht. Die Kolbenstange 14 verläuft etwa parallel zu der auf der Zeichenebene senkrecht stehenden schrägen Oberseite des Gehäuses 2. An dem zur Rückseite des Gehäuses 2 weisenden einen

Ende der Kolbenstange 14, das hier als Druckende 14a bezeichnet ist, ist die Umlenkrolle 16 in einer Umlenkrollenachse 14c drehbar angeordnet. Die Umlenkrollenachse 14c steht senkrecht auf der Zeichenebene und verläuft in y-Richtung.

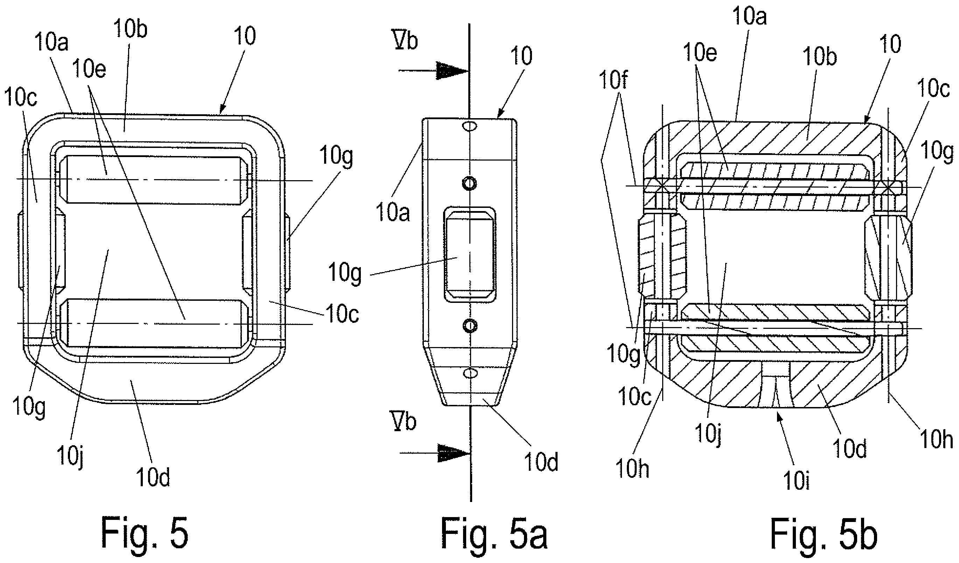

Ein zweites Ende der Kolbenstange 14 ragt aus der Antriebseinrichtung 13 zur Vorderseite des Gehäuses 2 weisend heraus und ist mit einem Ende eines Kraftspeicherelementes 15, z.B. eine Zugfeder, verbunden. Das andere Ende dieser Zugfeder ist an einem ersten Ende eines flexiblen Elementes 11 angebracht, das z.B. ein Seilabschnitt ist. Das flexible Element 11 verläuft schräg nach unten auf die Vorderseite des Gehäuses 2 zu und wird dann an einem Führungsabschnitt 12b eines Fixierstücks 12 um ca. 90° in die z-Richtung umgelenkt. Der so umgelenkte Endabschnitt des anderen Endes des flexiblen Elementes 11 geht durch eine Aufnahme 12e des Fixierstücks 12 hindurch und ist mit der Schlauchführung 10 verbunden, was unten weiter noch näher erläutert wird. Dabei liegt die Schlauchführung 10 mit ihrem Fußteil 10d (siehe Figur 5) in der Aufnahme 12e an und wird durch eine Zugkraft des flexiblen Elementes 11 in dieser Position gehalten.

Das Fixierstück 12 ist an dem Gehäuse 2 um eine Schwenkachse 12c verschwenkbar befestigt und weist einen Anlenkabschnitt 12a auf, welcher mit dem Führungsabschnitt 12b unter der Schwenkachse 12c angeordnet ist. Die Schwenkachse 12c steht wie die Umlenkrollenachse 14c parallel zu dieser senkrecht auf der Zeichenebene und verläuft in y-Richtung.

Der Anlenkabschnitt 12a des Fixierstücks 12 ist über eine Anlenkachse 12d mit einem Ende einer Schwenkstange 18 einer Schwenkantriebseinrichtung 17 verbunden. Die Schwenkantriebseinrichtung 17 ist z.B. ein Pneumatikzylinder und ist über eine Schwenkantriebsanlenkung 17a in einem Schwenkantriebshalter 2d mit dem Gehäuse 2 verbunden.

In der Ansetzstellung ist der Zitzenbecher 4 mit dem Haltersegment 7 an der Schlauchführung 10 anliegend fixiert, indem der Doppelschlauch 9 auf das Haltersegment 7 eine Zugkraft überträgt, die durch die Antriebseinrichtung 13 erzeugt wird. Dazu ist die Kolbenstange 14 der Antriebseinrichtung 13 zur Rückseite des Gehäuses 2 hin ausgefahren und spannt den Doppelschlauch 9 gegen die x-Richtung. Eine Zugspannung baut sich dabei auf, da der Doppelschlauch 9 mit einem Ende an dem Schlauchstutzenhalter 2c und mit seinem anderen Ende über das an der Schlauchführung 10 anliegende Haltersegment 7 des Zitzenbechers 4 gehalten ist. Weiterhin ist das Fixierstück 12 durch die eingefahrene Schwenkstange 18 der Schwenkantriebseinrichtung 17 in eine solche Position geschwenkt, in welcher die Schlauchführung 10 senkrecht steht, d.h. in z-Richtung ausgerichtet ist. Dabei wird durch die Form des an der Schlauchführung 10 anliegenden Haltersegments 7 so eine in z-Richtung verlaufende, korrespondierend ausgerichtete Haltung des Zitzenbechers 4 erzielt, dessen Längsachse somit auch in der z-Richtung liegt.

Da die Kolbenstange 14 der Antriebseinrichtung 13 zur Rückseite des Gehäuses 2 hin ausgefahren ist, ist die an dem Zugende 14b angebrachte Zugfeder 15 gespannt und erzeugt gleichzeitig eine Zugkraft in dem flexiblen Element 11, welches die Schlauchführung 10 fest in die Aufnahme 12e des Fixierstücks hineinzieht und in ihr fixiert.

Mit anderen Worten bewirkt die Antriebseinrichtung 13 mit der durchgehenden Kolbenstange 14 eine Fixierung des Zitzenbechers 4 in der Ansetzstellung an der Schlauchführung 10 und eine Fixierung der Schlauchführung 10 in dem Fixierstück 12.

Figur 3 zeigt eine schematische Längsschnittdarstellung der Zitzenbechereinheit 3 bzw. 3' des Melkzeugs 1 nach Figur 1 in einer Parkstellung.

Die in Figur 3 gezeigte Parkstellung ist aus der in Figur 2 gezeigten Ansetzstellung in einfacher Weise dadurch erreicht, dass die Schwenkantriebseinrichtung 17 die Schwenkstange 18 ausfährt und das Fixierstück 12 um die Schwenkachse 12c verschwenkt. Die Schwenkstange 18 ist dazu zur Vorderseite des Gehäuses 2 (die in Figur 3 links liegt) ausgefahren und das Fixierstück 12 ist im Uhrzeigersinn um die y-Achse so verschwenkt, dass der Zitzenbecher 4 zur Oberseite des Gehäuses 2 hin verschwenkt ist. Dabei wird das Kraftspeicherelement 15 zusätzlich gespannt, was eine Erhöhung der Zugkraft in dem flexiblen Element 11 zur Folge hat und die Fixierung der Schlauchführung 10 in der Aufnahme 12e des Fixierstücks erhöht. Das Kraftspeicherelement 15 dient so auch für einen notwendigen Längenausgleich zwischen der Kolbenstange 14 und dem flexiblen Element 11. Selbstverständlich ist es durch Anpassung der zugehörigen Komponenten möglich, dass der Zitzenbecher 4 in der Parkstellung fast waagerecht positioniert wird.

Diese Parkstellung wird in einem unbenutzten Zustand des Melkzeugs 1 eingenommen. Weiterhin verbleiben beim Ansetzen der Zitzenbecher 4 die übrigen in der Parkstellung. Außerdem wird beim Ende eines Melkvorgangs eines Zitzenbechers 4 dieser wieder in die Parkstellung gebracht. In der Parkstellung ist eine Verschmutzung der Zitzenöffnung des Kopfes 5 nur gering.

Wenn der Zitzenbecher 4 in der Ansetzstellung in einer nahezu senkrechten Position mit einer vorbestimmten Zitze des zu melkenden Tieres verbunden ist, wird die Melkstellung der Zitzenbechereinheit 3" eingenommen, welche Figur 4 in einer schematischen Längsschnittdarstellung der Zitzenbechereinheit 3" des Melkzeugs 1 nach Figur 1 in der Melkstellung zeigt.

Zu Einnahme der Melkstellung wird die Kolbenstange 14 der Antriebseinrichtung 13 in Richtung auf die Vorderseite des Gehäuses 2 ausgefahren, wobei die Umlenkrolle 16 von der Rückseite des Gehäuses 2 in x-Richtung weg bewegt wird und den Doppelschlauch 9 entspannt. Gleichzeitig wird das flexible Element 11 entlastet, wodurch die Schlauchführung 10 aus der Aufnahme 12e des Fixierstücks 12 freigegeben wird. Dadurch ergibt sich eine große freie Beweglichkeit des Zitzenbechers 4. Der an der Zitze des zu melkenden Tieres festgesaugte Zitzenbecher 4 ist somit nur über den Doppelschlauch 9 mit dem Gehäuse 2 des Melkzeugs 1 verbunden. Da der Doppelschlauch 9 nur ein geringes Gewicht besitzt, werden keine Zugkräfte auf den Zitzenbecher 4 ausgeübt.

Außerdem wird auch eine seitliche Bewegungsfreiheit in y-Richtung zum Anfahren und Ansetzen der anderen Zitzenbecher 4 ermöglicht, da der bereits in Melkstellung befindliche Zitzenbecher 4 über den Doppelschlauch 9 keine Behinderung darstellt und keine zusätzlichen Zugkräfte durch die weiteren Ansetzvorgänge auf den Euter bzw. die Zitze des zu melkenden Tiers aufbringt.

Die Figuren 5, 5a und 5b zeigen Darstellungen der Schlauchführung 10.

Figur 5 zeigt eine Ansicht in Richtung des Doppelschlauchs 9 in x-Richtung, Figur 5a eine Seitenansicht in y-Richtung und Figur 5b eine Schnittansicht in der y-z-Ebene längs Linie Vb aus Figur 5a.

Die Schlauchführung 10 weist einen Körper 10a mit einer im Wesentlichen quadratischen Gestalt auf. Der Körper 10a umfasst ein oberes Querteil 10b, zwei Seitenteile 10c und ein Fußteil 10d. Fußteil 10d und Querteil 10b sind parallel zueinander angeordnet und an ihren Enden untereinander durch jeweils ein Seitenteil 10c verbunden, wodurch sie einen Durchgang 10j für den Doppelschlauch 9 festlegen. In dem Durchgang 10j ist unterhalb des Querteils 10b und oberhalb des Fußteils 10d jeweils eine Horizontalrolle 10e angeordnet. Jede Horizontalrolle 10e ist um eine Horizontalrollenachse 10f, die in der y-Richtung verläuft, drehbar. In jedem Seitenteil 10c ist jeweils eine Vertikalrolle 10g um eine jeweilige Vertikalrollenachse 10h drehbar angeordnet, wobei die Vertikalrollenachsen 10h in z-Richtung verlaufen und senkrecht zu den Horizontalrollenachsen 10f angeordnet sind. Die Horizontalrollen 10e und Vertikalrollen 10g dienen zur reibungsarmen Führung des Doppelschlauchs 9 in dem Durchgang 10j. Dadurch ist eine freie axiale Beweglichkeit der Schlauchführung 10 auf dem Doppelschlauch 9 bzw. relativ zueinander möglich. Die Horizontalrollen 10e und die Vertikalrollen 10g sind hier als zylindrische Rollen ausgebildet. Andere Formen, z.B. ballige Rollen oder beschichtete Rollen sind natürlich möglich.

Das Fußteil 10d ist in z-Richtung nach unten hin verdickt und in x-Richtung nach unten hin verjüngt (Figur 5a). Es dient zum Einsatz in der Aufnahme 12e des Fixierstücks 12. Außerdem ist in dem verdickten Fußteil 10d der Schlauchführung 10 ein Befestigungsabschnitt 10i für eine Befestigung des Endes des flexiblen Elementes 11 vorgesehen.

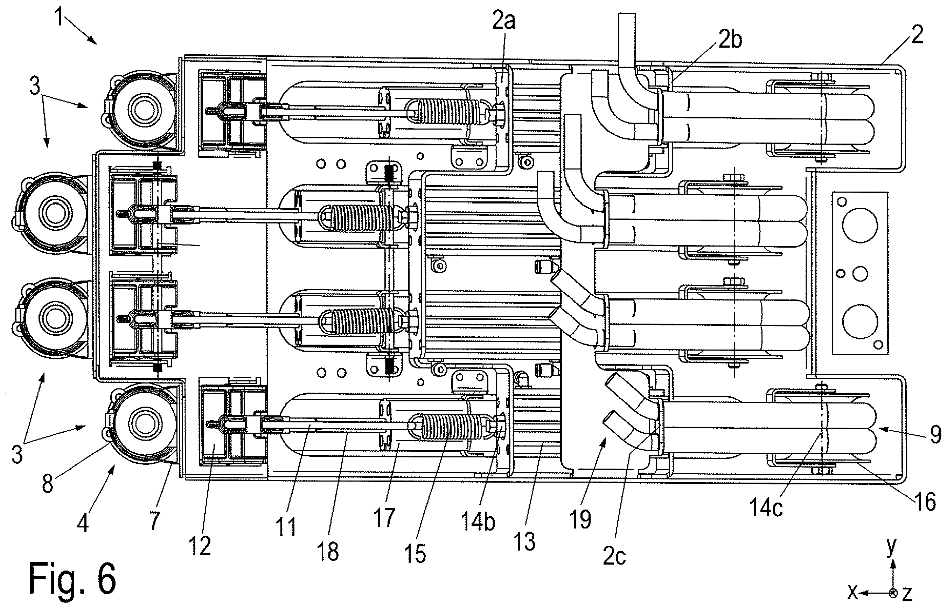

Figur 6 zeigt eine schematische Ansicht des Melkzeugs 1 nach Figur 1 von unten, wobei die Anordnung der verschiedenen Funktionseinheiten und -elemente zu sehen ist. Nur an der unten liegenden Zitzenbechereinheit 3 sind Bezugszeichen angeben. Das Gehäuse 2 ist von unten offen. Es ist natürlich auch möglich, dass jede Zitzenbechereinheit 3 ein eigenes Gehäuse besitzt, die aneinander in y-Richtung angeordnet und z.B. auch gegeneinander um die y-Achse verschwenkbar bzw. in einem gewissen Maß flexibel verschwenkbar sind. Die innen angeordneten Zitzenbechereinheiten 3 sind in x-Richtung um einen Abstand vor den äußeren Zitzenbechereinheiten 3 angeordnet, wodurch ein Zustellweg beim Ansetzvorgang minimiert werden kann. Weiterhin sind jeweils zwei Schlauchstutzen 19 zu erkennen.

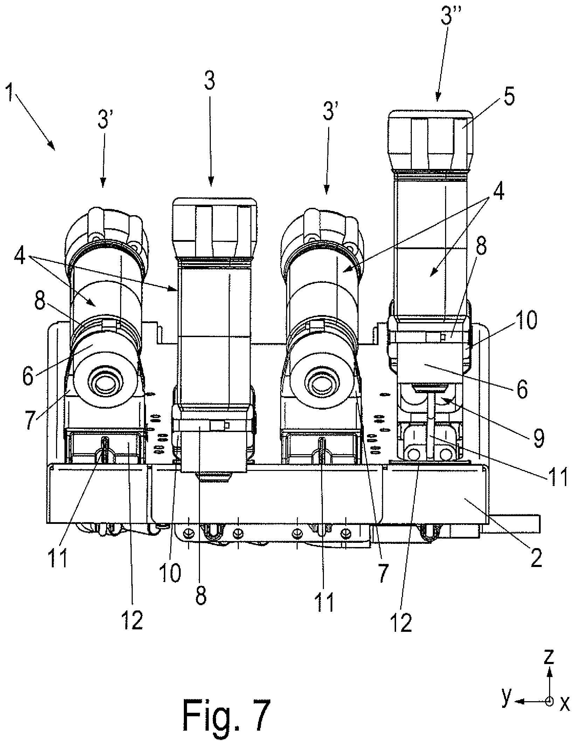

In Figur 7 ist eine schematische Ansicht des Melkzeugs 1 nach Figur 1 von der Seite der Zitzenbecher 4, d.h. von der Vorderseite des Gehäuses 2 dargestellt.

Die Zitzenbechereinheiten 3, 3', 3" sind hier in den unterschiedlichen Stellungen gezeigt. Die Zitzenbechereinheiten 3' befinden sich in der Parkstellung. Bei der Zitzenbechereinheit 3 steht der Zitzenbecher 4 in senkrechter Position in der Ansetzstellung. Die rechts außen befindliche Zitzenbechereinheit 3" ist in der Melkstellung mit freigegebenem Doppelschlauch 9.

Es ist in Figur 7 deutlich zu erkennen, dass der Zitzenbecher 4 der Zitzenbechereinheit 3" in der Melkstellung in z-Richtung höher steht als der Zitzenbecher 4 in der Ansetzstellung und die umgeschwenkten Zitzenbecher 4 in der Parkstellung. Durch den freigegebenen Doppelschlauch 9 kann das Melkzeug 1 beim Ansetzen der anderen Zitzenbecher 4 auch - wie schon oben erwähnt - in einem bestimmten Maß in der y-Richtung bewegt werden, ohne dass Kräfte auf den in Melkstellung befindlichen Zitzenbecher 4 ausgeübt werden.

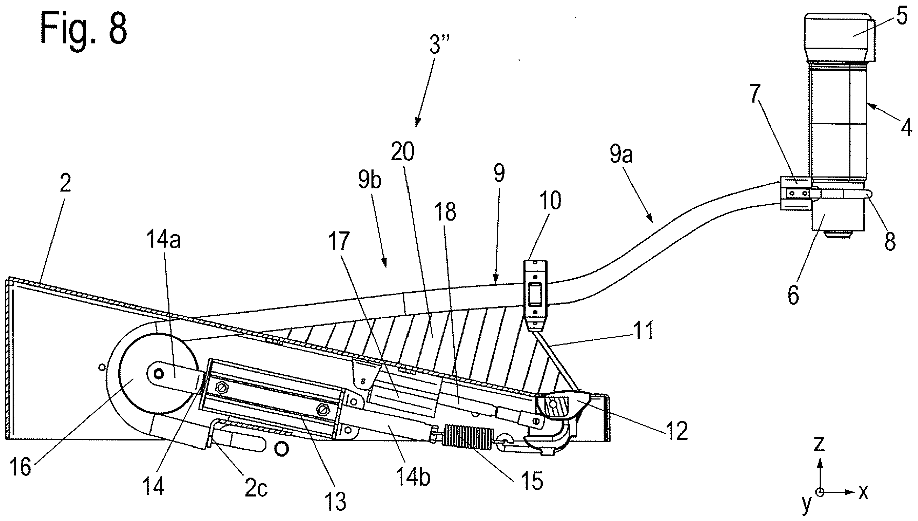

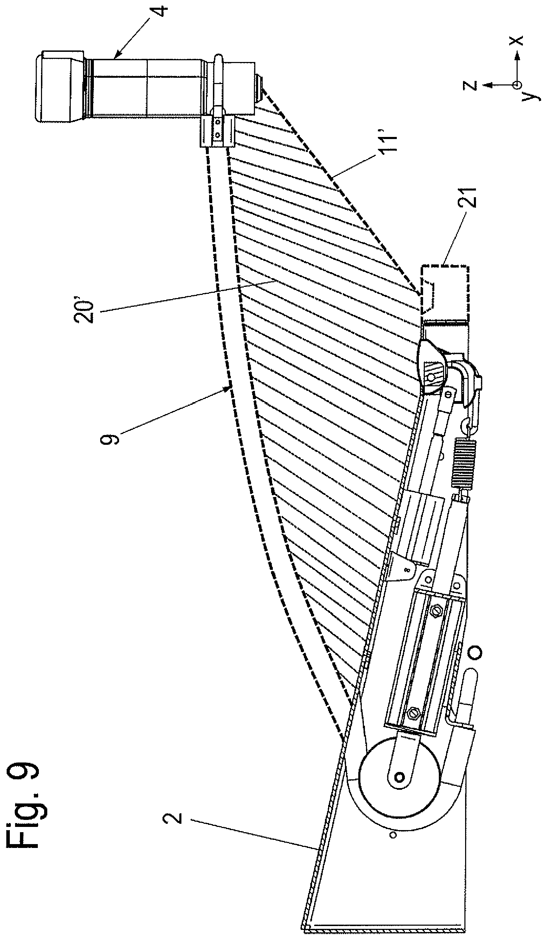

Figur 8 und 9 sind Darstellungen der Zitzenbechereinheit 3" des Melkzeugs in der Melkstellung zur Erläuterung von durch den Doppelschlauch festgelegten Bereichen.

In der Melkstellung ist der jeweilige Zitzenbecher 4 an einem freien Schlauchende 9a des Doppelschlauchs 9 bei einer relativ kleinen freigegebenen Länge des flexiblen Elementes 11 und somit der Schlauchführung 10 mit einer großen freien Beweglichkeit ausgestattet. Der Grund hierzu liegt in der doppelten Freigabe von Doppelschlauch 9 und Schlauchführung 10, zumal die Schlauchführung 10 - wie bereits oben detailliert erläutert - so gestaltet ist, dass sie auf dem Doppelschlauch 9 axial frei beweglich ist.

Ein großer Vorteil besteht bei dieser Konstruktion außerdem darin, dass ein Verheddern des flexiblen Elementes 11 und des Doppelschlauchs 9 mit benachbarten Zitzenbechereinheiten 3, 3', 3" minimiert wird. Es ist nahezu unmöglich, dass ein benachbarter Zitzenbecher 4 in den schraffierten Bereich, der von der Oberseite des Gehäuses 2, einer Schlauchgrenze 9b des Doppelschlauchs 9 und dem flexiblen Element 11 umgrenzt ist, gelangt. Wenn das flexible Element 11' direkt am Zitzenbecher 4 und einem Halterstück 21 angeordnet wäre, wie Figur 9 zeigt, ist die Gefahr aufgrund des in Figur 9 schraffierten größeren Bereiches 20' wesentlich größer.

Ein Einnehmen der Parkstellung (Figur 3) aus der Melkstellung (Figur 4) erfolgt über zwischenzeitliches Einnehmen der Ansetzstellung (Figur 2), indem die Kolbenstange 14 der Antriebseinrichtung 13 mit der Umlenkrolle 16 wieder in Richtung auf die Rückseite des Gehäuses 2 ausfährt und mit dem Zugende 14b einfährt. Dabei wird gleichzeitig die Schlauchführung 10 in die konische Aufnahme 12e des Fixierstücks 12 gezogen und der Zitzenbecher 4 über den Doppelschlauch 9, der durch die sich zurückbewegende Umlenkrolle 16 wieder gespannt wird, gegen die Schlauchführung 10 gezogen. Dadurch wird der Zitzenbecher 4 nach beendetem Melkvorgang von der zugeordneten Zitze abgezogen und fixiert. Dies erfolgt auch, wenn der Zitzenbecher 4 von dem zu melkenden Tier abgeschlagen (abgetreten) wurde oder abgefallen ist.

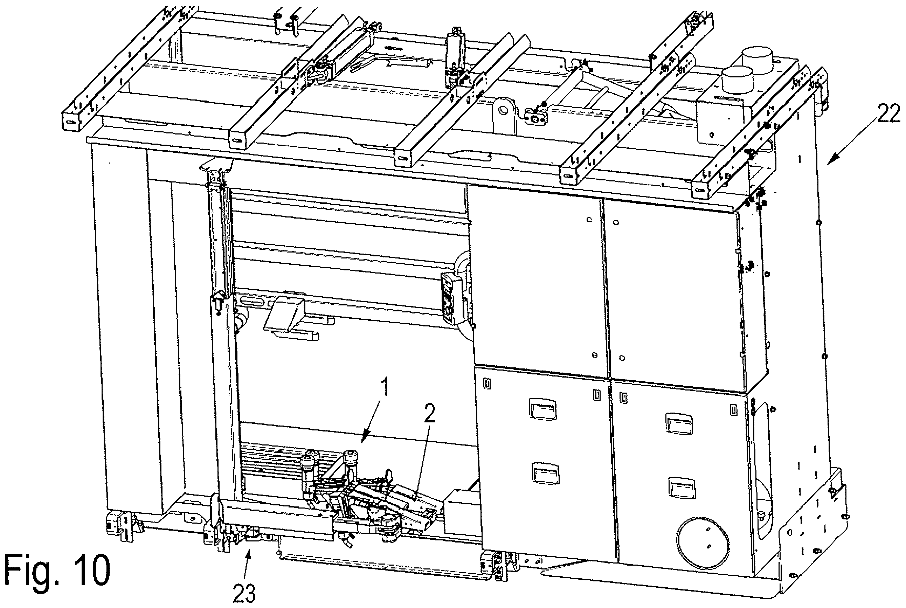

Schließlich zeigt Figur 10 eine perspektivische Darstellung eines Melkstands 22 mit dem Melkzeug 1 und Gehäuse 2. Das Melkzeug 2 ist hier an einer Tragarmeinrichtung 23 angebracht, welche selbsttätig oder durch einen Roboter (nicht gezeigt) zur Einnahme verschiedener Postionen zum Melken und zur Einstellung der verschiedenen Stellungen der Zitzenbechereinheiten 3, 3', 3" betätigbar ist. Mehrere solcher Melkstände 22 können in Reihe angeordnet sein und durch einen einzigen Roboter bedient werden.

Das Melkzeug 1 kann auch an einem Roboterarm montiert sein.

Die Tragarmeinrichtung 23 hat die Funktion, das Melkzeug 1 gewichtsneutral zu tragen und so leichtgängig zu sein, dass er den Bewegungen des zu melkenden Tiers folgt.

Wird das Melkzeug 1 an einer solchen Tragarmeinrichtung 23 befestigt, wird zum automatischen Ansetzen der Zitzenbecher 4 ein Roboterarm an die Tragarmeinrichtung 23 angedockt. Der Roboterarm bewegt die Tragarmeinrichtung 23 bzw. eine Tragarm davon zusammen mit dem Melkzeug 1 zu den Zitzen des zu melkenden Tieres und setzt die Zitzenbecher 4 nacheinander an die zugeordneten Zitzen an. Sobald alle Zitzen angesetzt sind, löst sich der Roboterarm vom Tragarm und fährt gegebenenfalls zu einem nächsten Melkstandplatz, um dort die Zitzenbecher 4 anzusetzen. Die Zitzenbecher 4 hängen während der Melkphase mit dem Melkzeug 1 am Tragarm, der den Bewegungen des Tieres folgt. Sobald der Milchfluss einer Zitze versiegt ist, wird der entsprechende Zitzenbecher 4 von der Zitze abgezogen und zum Schutz vor Schmutzeintrag in die Parkstellung gebracht. Sobald alle Zitzenbecher abgezogen und in der Parkstellung sind, schwenkt der Tragarm mit dem Melkzeug 1 von der Position unter dem Tier in die Position neben dem Tier, sodass das Tier den Melkplatz verlassen kann.

Da die Zitzenbechereinheiten 3 einzeln und unabhängig voneinander verwendbar und betätigbar sind, können sie natürlich auch für milchgebende Tiere mit Eutern, die eine unterschiedliche Anzahl von Zitzen, z.B. 3 oder 4, habe, verwendet werden.

Die Erfindung ist nicht auf die oben dargestellten Ausführungsbeispiele beschränkt sondern im Rahmen der beigefügten Ansprüche modifizierbar.

So kann zum Beispiel der Doppelschlauch 9 als ein Mehrfachschlauch ausgebildet sein.

### Bezugszeichen

- 1: Melkzeug
- 2: Gehäuse
- 2a, 2b: Antriebshalter
- 2c: Schlauchstutzenhalter
- 2d: Schwenkantriebshalter
- 2e: Öffnung
- 3, 3', 3": Zitzenbechereinheit
- 4: Zitzenbecher
- 5: Kopf
- 6: Befestigungsabschnitt
- 7: Haltersegment
- 8: Halterbügel
- 9: Doppelschlauch
- 9a: Schlauchende
- 9b: Schlauchgrenze
- 10: Schlauchführung
- 10a: Körper
- 10b: Querteil
- 10c: Seitenteil
- 10d: Fußteil
- 10e: Horizontalrolle
- 10f: Horizontalrollenachse
- 10g: Vertikalrolle
- 10h: Vertikalrollenachse
- 10i: Befestigungsabschnitt
- 10j: Durchgang
- 11: Flexibles Element
- 12: Fixierstück
- 12a: Anlenkabschnitt
- 12b: Führungsabschnitt
- 12c: Schwenkachse
- 12d: Anlenkachse
- 12e: Aufnahme
- 13: Antriebseinrichtung
- 14: Antriebsstange
- 14a: Druckende
- 14b: Zugende
- 14c: Umlenkrollenachse
- 15: Kraftspeicherelement
- 16: Umlenkrolle
- 17: Schwenkantriebseinrichtung
- 17a: Schwenkantriebsanlenkung
- 18: Schwenkstange
- 19: Schlauchstutzen
- 20, 20': Bereich
- 21: Halterstück
- 22: Melkstand
- 23: Tragarmeinrichtung
- x, y, z: Koordinaten

## Patentansprüche

1. Melkzeug (1) für einen Melkstand (22) zum Melken von milchgebenden Tieren, aufweisend mindestens eine Zitzenbechereinheit (3, 3', 3") mit einem Gehäuse (2), einem Zitzenbecher (4), einer Antriebseinrichtung (13) und einer mit dem Zitzenbecher (4) verbundenen Schlauchanordnung, **dadurch gekennzeichnet, dass** die Schlauchanordnung mittels einer Schlauchführung (10) geführt ist, welche in einer fixierten Position verschwenkbar und in einer von der fixierten Position unterschiedlichen Position durch ein flexibles Element (11) begrenzt frei bewegbar ist, wobei eine Rückführung des Zitzenbechers (4) nur mit Hilfe der Schlauchanordnung erfolgt.

2. Melkzeug (1) nach Anspruch 1, **dadurch gekennzeichnet, dass** die mindestens eine Zitzenbechereinheit (3, 3', 3") aus einer Parkstellung, in welcher der Zitzenbecher (4) eine zur Senkrechten geneigte Position einnimmt, in eine Ansetzstellung, in welcher der Zitzenbecher (4) in einer im Wesentlichen senkrechten Position steht, in eine Melkstellung, in welcher der Zitzenbecher (4) mit einer zugeordneten Zitze des zu melkenden Tieres verbunden ist, und wieder zurück bewegbar ist.

3. Melkzeug (1) nach Anspruch 1 oder 2, **dadurch gekennzeichnet, dass** die Antriebseinrichtung (13) der mindestens einen Zitzenbechereinheit (3, 3', 3") mit der Schlauchanordnung und der Schlauchführung (10) gleichzeitig in Wirkverbindung steht.

4. Melkzeug (1) nach Anspruch 3, **dadurch gekennzeichnet, dass** die Antriebseinrichtung (13) in einer Stellung eine Zugkraft auf den Zitzenbecher (4) mit der Schlauchanordnung zur Einnahme der Ansetzstellung in Anlage gegen die Schlauchführung (10) ausübt, wobei gleichzeitig die Schlauchführung (10) in der fixierten Position gehalten ist, und in einer anderen Stellung keine Zugkraft auf den Zitzenbecher (4) ausübt, wobei gleichzeitig die Schlauchführung (10) in die von der fixierten Position unterschiedliche Position freigegeben ist.

5. Melkzeug (1) nach einem der Ansprüche 1 bis 4, **dadurch gekennzeichnet, dass** die Antriebseinrichtung (13) über eine verstellbare Umlenkrolle (16) mit der Schlauchanordnung und über ein flexibles Element (11) mit der Schlauchführung (10) zur Bewegung der mindestens einen Zitzenbechereinheit (3, 3', 3") aus der Ansetzstellung in eine Melkstellung und wieder zurück in eine Ansetzstellung in Wirkverbindung steht.

6. Melkzeug (1) nach Anspruch 5, **dadurch gekennzeichnet, dass** die Antriebseinrichtung (13) als ein Verstellzylinder mit einer durchgehenden Kolbenstange (14) ausgebildet ist, an deren einem Ende die Umlenkrolle (16) und an deren anderen Ende das flexible Element (11) angebracht ist.

7. Melkzeug (1) nach Anspruch 6, **dadurch gekennzeichnet, dass** das flexible Element (11) über ein Kraftspeicherelement (15) mit der Kolbenstange (14) gekoppelt ist.

8. Melkzeug (1) nach einem der Ansprüche 4 bis 6, **dadurch gekennzeichnet, dass** die mindestens eine Zitzenbechereinheit (3, 3', 3") eine Schwenkantriebseinrichtung (17) zur Verschwenkung des Zitzenbechers (4) aus einer Ansetzstellung in eine Parkstellung und zurück aufweist.

9. Melkzeug (1) nach Anspruch 8, **dadurch gekennzeichnet, dass** die Schlauchführung (10) in einem verschwenkbaren Fixierstück (12) zur Einnahme ihrer fixierten Position aufnehmbar und mit dem verschwenkbaren Fixierstück (12) mittels der Schwenkantriebseinrichtung (17) in die Parkstellung und aus der Parkstellung in die Ansetzstellung verschwenkbar ist.

10. Melkzeug (1) nach Anspruch 9, **dadurch gekennzeichnet, dass** das flexible Element (11) durch einen Führungsabschnitt (12b) des verschwenkbaren Fixierstücks (12) geführt ist.

11. Melkzeug (1) nach einem der vorhergehenden Ansprüche, **dadurch gekennzeichnet, dass** die Schlauchführung (10) Rollen (10e, 10g) zur axialen Führung der Schlauchanordnung aufweist.

12. Melkzeug (1) nach einem der vorhergehenden Ansprüche, **dadurch gekennzeichnet, dass** die Schlauchanordnung einen Mehrfachschlauch aufweist, in welchem sie mindestens teilweise angeordnet ist.

13. Melkzeug (1) nach Anspruch 12, **dadurch gekennzeichnet, dass** der Mehrfachschlauch als ein Doppelschlauch (9) ausgebildet ist.

14. Melkstand (22) zum Melken von milchgebenden Tieren, mit einem Melkzeug (1) nach einem der vorhergehenden Ansprüche.

15. Melkstand (22) nach Anspruch 12, **dadurch gekennzeichnet, dass** das Melkzeug (1) an einer Tragarmeinrichtung (23) angebracht ist.

16. Melkstand (22) nach Anspruch 12, **dadurch gekennzeichnet, dass** das Melkzeug (1) an einem Roboterarm angebracht ist.

## Claims

1. A milking cluster (1) for a milking parlor (22) for milking milk-producing animals, said milking cluster having at least one teat cup unit (3, 3', 3") with a housing (2), a teat cup (4), a drive device (13) and a hose arrangement which is connected to the teat cup (4), **characterized in that** the hose arrangement is guided by means of a hose guide (10) which is pivotable in a fixed position and, in a position which differs from the fixed position, is freely movable within limits by means of a flexible element (11), wherein the teat cup (4) is returned only by means of the hose arrangement.

2. The milking cluster (1) as claimed in claim 1, **characterized in that** the at least one teat cup unit (3, 3', 3") is movable out of a park position in which the teat cup (4) assumes a position inclined with respect to the perpendicular, into a positioning position in which the teat cup (4) is in a substantially perpendicular position, into a milking position in which the teat cup (4) is connected to an associated teat of the animal to be milked, and back again.

3. The milking cluster (1) as claimed in claim 1 or 2, **characterized in that** the drive device (13) of the at least one teat cup unit (3, 3', 3") is at the same time operatively connected to the hose arrangement and the hose guide (10).

4. The milking cluster (1) as claimed in claim 3, **characterized in that** in one position the drive device (13) exerts a pulling force on the teat cup (4) with the hose arrangement to assume the positioning position in abutment against the hose guide (10), wherein at the same time the hose guide (10) is held in the fixed position, and in another position does not exert any pulling force on the teat cup (4), wherein at the same time the hose guide (10) is released into the position which differs from the fixed position.

5. The milking cluster (1) as claimed in one of claims 1 to 4, **characterized in that** the drive device (13) is operatively connected to the hose arrangement by means of an adjustable guide roller (16) and to the hose guide (10) by means of a flexible element (11) for moving the at least one teat cup unit (3, 3', 3") from the positioning position into a milking position and back again into a positioning position.

6. The milking cluster (1) as claimed in claim 5, **characterized in that** the drive device (13) is realized as an adjusting cylinder with a continuous piston rod (14), at the one end of which the guide roller (16) is attached and at the other end of which the flexible element (11) is attached.

7. The milking cluster (1) as claimed in claim 6, **characterized in that** the flexible element (11) is coupled with the piston rod (14) by means of a force-storing element (15).

8. The milking cluster (1) as claimed in one of claims 4 to 6, **characterized in that** the at least one teat cup unit (3, 3', 3") has pivot drive device (17) for pivoting the teat cup (4) out of the positioning position into a park position and back.

9. The milking cluster (1) as claimed in claim 8, **characterized in that** the hose guide (10) is accommodatable in a pivotable fixing piece (12) for assuming its fixed position and is pivotable with the pivotable fixing piece (12) by means of the pivot drive device (17) into the park position and out of the park position into the positioning position.

10. The milking cluster (1) as claimed in claim 9, **characterized in that** the flexible element (11) is guided by a guide portion (12b) of the pivotable fixing piece (12).

11. The milking cluster (1) as claimed in one of the preceding claims, **characterized in that** the hose guide (10) has rollers (10e, 10g) for axially guiding the hose arrangement.

12. The milking cluster (1) as claimed in one of the preceding claims, **characterized in that** the hose arrangement has a multiple hose, in which it is arranged at least in part.

13. The milking cluster (1) as claimed in claim 12, **characterized in that** the multiple hose is realized as a double hose (9).

14. A milking parlor (22) for milking milk-producing animals, said milking parlor having a milking cluster (1) as claimed in one of the preceding claims.

15. The milking parlor (22) as claimed in claim 12, **characterized in that** the milking cluster (1) is attached on a supporting arm device (23).

16. The milking parlor (22) as claimed in claim 12, **characterized in that** the milking cluster (1) is attached on a robot arm.

## Revendications

1. Faisceau trayeur (1) pour une stalle de traite (22) pour la traite d'animaux donnant du lait, présentant au moins une unité de gobelets trayeurs (3, 3', 3") avec un boîtier (2), un gobelet trayeur (4), un dispositif d'entraînement (13) et une disposition de tuyaux reliée au gobelet trayeur (4), **caractérisé en ce que** la disposition de tuyaux est guidée au moyen d'un conduit pour tuyaux (10) qui peut pivoter dans une position fixée et est mobile avec une liberté de mouvement limitée à l'aide d'un élément flexible (11) dans une position différente de la position fixée, le rappel du gobelet trayeur (4) s'effectuant seulement à l'aide de la disposition de tuyaux.

2. Faisceau trayeur (1) selon la revendication 1, **caractérisé en ce que** l'au moins une unité de gobelets trayeurs (3, 3', 3") peut être déplacée d'une position de rangement dans laquelle le gobelet trayeur (4) prend une position inclinée par rapport à la verticale à une position d'application dans laquelle le gobelet trayeur (4) est dans une position sensiblement verticale, à une position de traite dans laquelle le gobelet trayeur (4) est relié à un pis correspondant de l'animal à traire, et retour.

3. Faisceau trayeur (1) selon la revendication 1 ou 2, **caractérisé en ce que** le dispositif d'entraînement (13) de l'au moins une unité de gobelets trayeurs (3, 3', 3") est en liaison active simultanément avec la disposition de tuyaux et le conduit pour tuyaux (10).

4. Faisceau trayeur (1) selon la revendication 3, **caractérisé en ce que** le dispositif d'entraînement (13) exerce, dans une position, une force de traction sur le gobelet trayeur (4) avec la disposition de tuyaux pour qu'il prenne la position d'application en appui contre le conduit pour tuyaux (10), tandis que le conduit pour tuyaux (10) est retenu dans la position fixée, et dans une autre position, n'exerce aucune force de traction sur le gobelet trayeur (4), tandis que le conduit pour tuyaux (10) est libéré pour prendre la position différente de la position fixée.

5. Faisceau trayeur (1) selon l'une des revendications 1 à 4, **caractérisée en ce que** le dispositif d'entraînement (13) est en liaison active avec la disposition de tuyaux par l'intermédiaire d'un galet de renvoi (16) déplaçable et avec le conduit pour tuyaux (10) par l'intermédiaire d'un élément flexible (11) pour déplacer l'au moins une unité de gobelets trayeurs (3, 3', 3") de la position d'application à une position de traite et retour dans une position d'application.

6. Faisceau trayeur (1) selon la revendication 5, **caractérisé en ce que** le dispositif d'entraînement (13) est réalisé comme un cylindre de réglage avec une tige de piston continue (14) dont une extrémité porte le galet de renvoi (16) et l'autre extrémité l'élément flexible (11).

7. Faisceau trayeur (1) selon la revendication 6, **caractérisé en ce que** l'élément flexible (11) est couplé à la tige de piston (14) par un élément accumulateur de force (15).

8. Faisceau trayeur (1) selon l'une des revendications 4 à 6, **caractérisé en ce que** l'au moins une unité de gobelets trayeurs (3, 3', 3") présente un dispositif d'entraînement pivotant (17) pour faire pivoter le gobelet trayeur (4) d'une position d'application à une position de rangement et retour.

9. Faisceau trayeur (1) selon la revendication 8, **caractérisé en ce que** le conduit pour tuyaux (10) peut être reçu dans une pièce de fixation pivotante (12) pour prendre sa position fixée et peut pivoter avec la pièce de fixation pivotante (12) au moyen du dispositif d'entraînement pivotant (17) vers la position de rangement et de la position de rangement à la position d'application.

10. Faisceau trayeur (1) selon la revendication 9, **caractérisé en ce que** l'élément flexible (11) est guidé à travers une section de guidage (12b) de la pièce de fixation pivotante (12).

11. Faisceau trayeur (1) selon l'une des revendications précédentes, **caractérisé en ce que** le conduit pour tuyaux (10) présente des galets (10e, 10g) pour le guidage axial de la disposition de tuyaux.

12. Faisceau trayeur (1) selon l'une des revendications précédentes, **caractérisé en ce que** la disposition de tuyaux présente un tuyau multiple dans lequel elle est au moins en partie disposée.

13. Faisceau trayeur (1) selon la revendication 12, **caractérisé en ce que** le tuyau multiple est réalisé comme un double tuyau (9).

14. Stalle de traite (22) pour la traite d'animaux donnant du lait, avec un faisceau trayeur (1) selon l'une des revendications précédentes.

15. Stalle de traite (22) selon la revendication 12, **caractérisée en ce que** le faisceau trayeur (1) est disposé sur un dispositif de bras porteur (23).

16. Stalle de traite (22) selon la revendication 12, **caractérisé en ce que** le faisceau trayeur (1) est disposé sur un bras de robot.
